# FASCICULE DE BREVET EUROPEEN

(11) **EP 2 800 164 B1**
(45) Date de publication et mention de la délivrance du brevet: **26.07.2017**
(21) Numéro de dépôt: 14163051.7
(22) Date de dépôt: 01.04.2014
(51) Int. Cl.: H01M 2/10, H01M 2/34

(54) **FIXATION D'UNE BATTERIE DE TAILLE VARIABLE DANS UN COFFRET ÉLECTRIQUE**
BEFESTIGUNG EINER BATTERIE VARIABLER GRÖSSE IN EINEM ELEKTRISCHEN SCHALTSCHRANK
FIXING OF A BATTERY WITH VARYING SIZE IN AN ELECTRIC BOX

(30) Priorité: 30.04.2013 FR 1301001
(43) Date de publication de la demande: 05.11.2014
(73) Titulaire: Schneider Electric Industries SAS, 92500 Rueil-Malmaison (FR)
(72) Inventeur: Bordonado, Franck, 38050 Grenoble Cedex 09 (FR); Caous, Philippe, 38050 Grenoble Cedex 09 (FR); Pollo, Stéphane, 38050 Grenobvle Cedex 09 (FR)

(56) Documents cités:
- EP-A1- 1 032 058
- WO-A1-2012/102383
- DE-A1-102010 028 194
- US-A1- 2010 294 721

## Description

### DOMAINE TECHNIQUE

L'invention concerne le maintien en position d'un boîtier électrique parallélépipédique de taille variable, notamment une batterie, dans l'enveloppe d'un coffret électrique, notamment une interface de télécommande d'interrupteurs.

### ETAT DE LA TECHNIQUE

Les réseaux électriques sont généralement architecturés en plusieurs niveaux, avec un premier réseau de transport et de répartition très haute et haute tensions depuis les centrales de production sur de grandes distances. Après transformation, un réseau de distribution moyenne tension HTA ou MT lui succède pour des transports à plus petite échelle, vers des clients de type industriels ou vers des réseaux basse tension BT qui alimentent des clients de faible demande énergétique.

Au niveau du réseau de distribution usuellement entre 1 et 35 kV, et plus précisément 15 ou 20 kV en France, il est usuel que les appareillages HTA puissent être télécommandés à partir de postes distants. Ainsi, Electricité de France (EdF) utilise des interfaces de télécommande d'interrupteurs 400 A, ou ITI, pour commander jusque huit interrupteurs en utilisant le réseau radio analogique ou numérique, le réseau téléphonique commuté, une liaison téléphonique dédiée, ou autres types de réseaux informatiques.

Un ITI, alimenté directement sur le réseau alternatif MT, permet donc la télécommunication avec le poste de conduite de réseau, la manoeuvre des commandes électriques des interrupteurs, la détection des défauts HTA, l'ouverture automatique d'un interrupteur sur détection du départ en défaut, la permutation automatique des sources d'alimentation, l'enregistrement des manoeuvres et la signalisation des événements datés. De plus, l'ITI doit assurer ses fonctions en cas de perte de la source alternative d'alimentation ; à cette fin, il comprend une source autonome d'alimentation qui vient suppléer la source usuelle alternative extérieure. Les distributeurs ont des prescriptions strictes pour ces batteries, qui doivent pouvoir être remplacées sous tension et sans outil spécifique ; EdF impose ainsi une unique batterie étanche d'accumulateurs 12 V, C₂₀ 38 Ah à 20°C, et 1,75 V par élément, dont les dimensions externes ne doivent pas dépasser 205 × 185 × 180 mm³.

Les batteries sont mises en place à l'intérieur du coffret de l'ITI, dans un compartiment dédié de dimensions adéquates pour permettre le logement de la batterie et également une ventilation assurant la dissipation thermique. La gravité seule assure classiquement le maintien en position de la batterie, éventuellement dans un espace confiné aux dimensions adaptées, comme un sous-compartiment ou un tiroir.

Les documents WO2012/102383A1 et EP2610944A1 décrivent des solutions de fixation d'une batterie.

Depuis peu, certaines contraintes ont été ajoutées pour la réalisation des coffrets ITI. En particulier, il est requis de passer avec succès des tests vibratoires et sismiques, tels que par exemple définis dans la norme IEC 255-21-3. Or les solutions existantes de maintien des batteries ne permettent pas de remplir ces critères.

Par ailleurs, l'encombrement dans les postes où sont placés les ITI peut impliquer la mise en place d'un coffret dit horizontal ou vertical, selon la taille relative de sa base par rapport à sa hauteur. Des distributeurs préféreraient utiliser le même coffret pour ces deux orientations, ceci afin de pouvoir retarder le choix et organiser leurs commandes et stocks. Or les batteries à accumulateurs plomb, les plus courantes dans l'application concernée, sont de préférence utilisées à plat du fait de la présence d'un électrolyte (liquide ou gel) acide qui doit y rester confiné, alors que leur logement dans l'ITI n'a pas la même orientation selon la configuration. Cette double contrainte augmente la variabilité de la dimension de la batterie à maintenir de façon à résister aux tests sismiques dans le coffret ITI.

### EXPOSE DE L'INVENTION

Parmi autres avantages, l'invention vise à satisfaire aux critères de tenue vibratoire et sismique pour les coffrets ITI existants ; l'invention permet également de s'adapter à différentes dimensions de batterie ou orientations de coffret.

Plus généralement, l'invention se rapporte à un système de maintien d'une batterie, ou autre boîtier parallélépipédique, au sein d'une enveloppe, ledit système étant adapté pour une gamme de dimensions du boîtier électrique, et avantageusement pour deux orientations à 90° l'une de l'autre de l'enveloppe, tout en satisfaisant à des critères de la norme IEC 255-21-3.

En particulier, l'invention concerne un système de maintien d'un boîtier électrique parallélépipédique au sein d'une enveloppe de coffret électrique, notamment un coffret de télécommande d'interrupteurs de type ITI, utilisant deux principes, l'un avec une sangle pour le blocage de deux axes, l'autre par butées mécaniques pour le blocage des autres axes. Le système selon l'invention comprend une platine inférieure et une plaque latérale sensiblement rectangulaires ainsi qu'un élément d'adossement doté d'une surface d'appui, les plans de ces trois éléments solidarisés entre eux formant un trièdre rectangle dans lequel peut être logé le boîtier électrique. La surface d'appui et la platine comprennent chacune au moins un orifice longitudinal, et de préférence plusieurs orifices parallèles alignés selon une direction orthogonale à leur axe longitudinal ou un orifice de taille ajustable grâce à un barreau mobile, dans lequel la sangle peut passer. Lorsqu'elle passe dans les orifices, et en fonction de la présence ou non d'un boîtier dans le trièdre, la sangle forme un triangle ou un quadrilatère dont deux côtés sont plaqués à l'extérieur du trièdre contre la plaque et la surface d'appui, la sangle étant à plat sur chacun des côtés du polyèdre ainsi formé. La sangle couplée à l'adossement sur la platine et sur la surface d'appui permet donc de bloquer le boîtier dans quatre directions.

Par ailleurs, la platine comprend des moyens de butée mobile qui disposent notamment d'une surface de butée dont le plan est parallèle à la plaque latérale et qui peut se déplacer dans une direction orthogonale à ce plan. La platine comprend également des moyens de guidage du dispositif de butée mobile ; de préférence, le dispositif de butée mobile comprend un premier côté plan, associé à la surface de butée et orthogonal à elle, qui peut coulisser à plat sur la platine, et un deuxième côté adapté pour coopérer avec les moyens de guidage, notamment orthogonal au premier côté et pouvant coulisser le long du bord de la platine, formé par exemple par un rebord de ladite platine, à la façon d'un té. La platine comprend également des moyens de fixation du dispositif de butée mobile dans plusieurs positions relatives, notamment des orifices qui peuvent loger des vis coopérant avec des trous, de préférence oblongs pour permettre tous les ajustements de position, du dispositif de butée mobile. Les vis sont de préférence mises en place dans deux trous sur le bord de la platine, avec leur axe parallèle au plan de la platine. Le dispositif de butée mobile ainsi fixé sur la platine et la plaque latérale bloquent les deux degrés de liberté restants.

Avantageusement, la platine est munie de moyens de mise en place, notamment des rebords, sur ses côtés normaux à la surface de butée du dispositif de butée mobile ; la platine peut également être dotée d'un dispositif de butée fixe plan sur le dernier côté, dont le plan est confondu avec celui de la surface d'appui.

La platine est de préférence associée à une plaque inférieure du système de maintien, ladite plaque étant solidarisée à la plaque latérale pour former le trièdre. La plaque inférieure comprend des ouïes d'aération et de passage de câbles, ainsi que des éléments espaceurs comme des crevées, définissant une surface parallèle vers l'intérieur du trièdre, pour écarter la face du boitier en appui.

La plaque latérale comprend également des ouïes d'aération, et des éléments espaceurs comme des emboutis définissant une surface parallèle vers l'intérieur du trièdre, pour écarter la face du boitier en appui. L'élément d'adossement est solidarisé à la plaque latérale pour former le trièdre ; de préférence, il est en forme d'équerre et fixé à l'autre extrémité à une plaque de fond, également solidaire de la plaque latérale et de la plaque inférieure s'il y a lieu.

De préférence, chacun des éléments du système de fixation, hors la sangle, sont formés par des tôles pliées.

L'invention concerne également l'enveloppe parallélépipédique d'un coffret électrique comprenant un logement pour un boîtier électrique parallélépipédique, avec un système de maintien dont le trièdre délimite trois côtés dudit logement. De préférence, le logement est dans un coin de l'enveloppe, de sorte que trois parois de l'enveloppe forment les plaques latérale, inférieure et de fond dudit système.

L'invention est également relative à un coffret de télé-conduite, notamment d'interface de télécommande d'interrupteurs de distribution, dans lequel une batterie est maintenue en position par le système de maintien précédent.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
La figure 1 représente schématiquement un coffret ITI dans deux orientations différentes.
La figure 2 montre des parois d'un coffret délimitant un logement de batterie pour un mode de réalisation préféré de l'invention.
Les figures 3A et 3B représentent une platine et son té coulissant sur lesquels peut reposer une batterie dans un mode de réalisation préféré de l'invention.
La figure 4 illustre un trièdre de logement d'une batterie dans un mode de réalisation préféré de l'invention.
Les figures 5A et 5B montrent une batterie de deux dimensions différentes dans deux orientations différentes maintenue dans un coffret par un mode de réalisation préféré de l'invention.

### DESCRIPTION DETAILLEE D'UN MODE DE REALISATION PREFERE

Par simplification de la description, les différents éléments seront décrits en relation avec une position d'utilisation du coffret, monté dans un poste sur une paroi verticale, avec une batterie mise en place sur un socle horizontal du coffret ; de plus, la configuration usuelle sera considérée comme la position verticale du coffret utilisée dans 85 % des cas en pratique. Il est cependant entendu que les termes de position tels que « horizontal », « latéral », « fond » ne sont nullement restrictifs quant à l'objet de l'invention. Par ailleurs, les termes géométriques, tels que « orthogonal »,... doivent se comprendre dans leur acceptation mécanique, c'est-à-dire tolérant un écart par rapport à la définition mathématique stricte : par exemple, un « rectangle » peut, selon l'invention, être bombé et avoir des angles émoussés différant légèrement de 90°.

Le mode de réalisation préféré de l'invention décrit ci-après permet de répondre au maximum de critères des distributeurs d'énergie, avec un maintien d'une batterie, quelles que soient ses dimensions au vu des contraintes imposées sur sa puissance, permettant de passer les tests sismiques et vibratoires, et ce dans deux orientations possibles à 90° l'une de l'autre du coffret, avec la batterie toujours à plat sur sa base sur un socle horizontal dudit coffret. En particulier, dans le mode de réalisation préféré, la batterie 12 V, C₂₀ 38 Ah à 20°C peut avoir les dimensions suivantes, lesdites dimensions étant prises dans la position d'utilisation de la batterie qui repose sur sa base délimitée par la longueur et la largeur :

| | Minimum | Typique | Maximum |
|---|---|---|---|
| Longueur | 166 mm | 197 mm | 205 mm |
| Largeur | 175 mm | 165 mm | 185 mm |
| Hauteur | 125 mm | 170 mm | 180 mm |
| Poids | 9 kg | 14 kg | 15 kg |

Cependant, les dimensions peuvent varier, et certains des éléments décrits peuvent être omis d'un mode de réalisation conforme à l'invention.

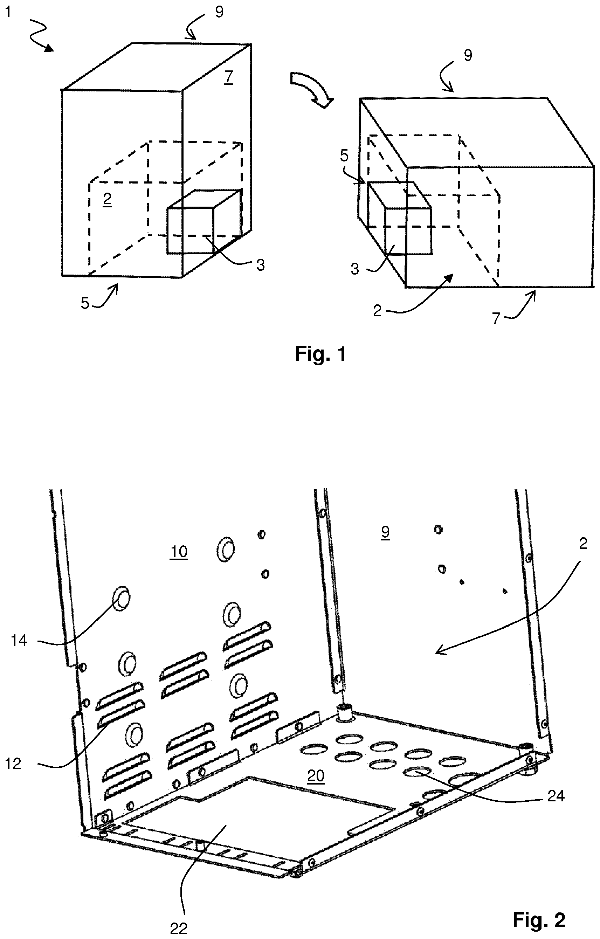

Tel qu'illustré en figure 1, le coffret 1 est un parallélépipède rectangle, dans lequel un logement 2 est réservé à la batterie 3. De préférence, le logement 2 est dans un coin du coffret 1, de sorte que trois parois 5, 7, 9 du coffret 1 forment trois parois du logement dédié ; avantageusement, le logement 2 est localisé en bas du coffret 1 quelle que soit son orientation (horizontale ou verticale) afin d'assurer une bonne dissipation thermique de la batterie 3. En particulier, une paroi externe inférieure 5 et une paroi externe latérale 7 du coffret 1 correspondent à deux plaques sur lesquelles, selon l'orientation du coffret 1, la batterie 3 peut reposer, la troisième paroi de fond 9 étant opposée à un moyen d'accès à l'intérieur du coffret 1 de type porte (non illustré), et de préférence destinée à être solidarisée à une paroi verticale du poste.

Dans une première position, la batterie 3 est posée à plat sur la paroi inférieure 5 qui correspond à un coffret 1 placé en position verticale, alors que dans une deuxième position, la batterie 3 est posée sur la paroi latérale 7, la paroi inférieure 5 étant ainsi verticale en usage. Les trois parois 5, 7, 9 forment ainsi un trièdre rectangle tel qu'illustré en figure 2 dans lequel est logée la batterie 3. Afin de satisfaire les critères de résistance aux vibrations, les six degrés de liberté de la batterie sont bloqués par des moyens différents.

Un premier degré de liberté est bloqué par l'adossement de la batterie 3 à la paroi latérale 7, qui est formée par une plaque 10, sensiblement rectangulaire, munie d'évidements ou ouïes d'aération 12 permettant un écoulement de l'air et une ventilation de la batterie 3. Il est de plus souhaitable que la batterie 3 ne repose par directement contre ladite plaque 10, et des espaceurs 14 sont mis en place, notamment par emboutissage de la plaque 10 : la batterie 3 s'appuie sur lesdits espaceurs 14 afin de libérer un espace, par exemple d'une épaisseur supérieure à 3 mm, entre la plaque 10 et la majeure partie du côté de la batterie 3 qui y est adossée.

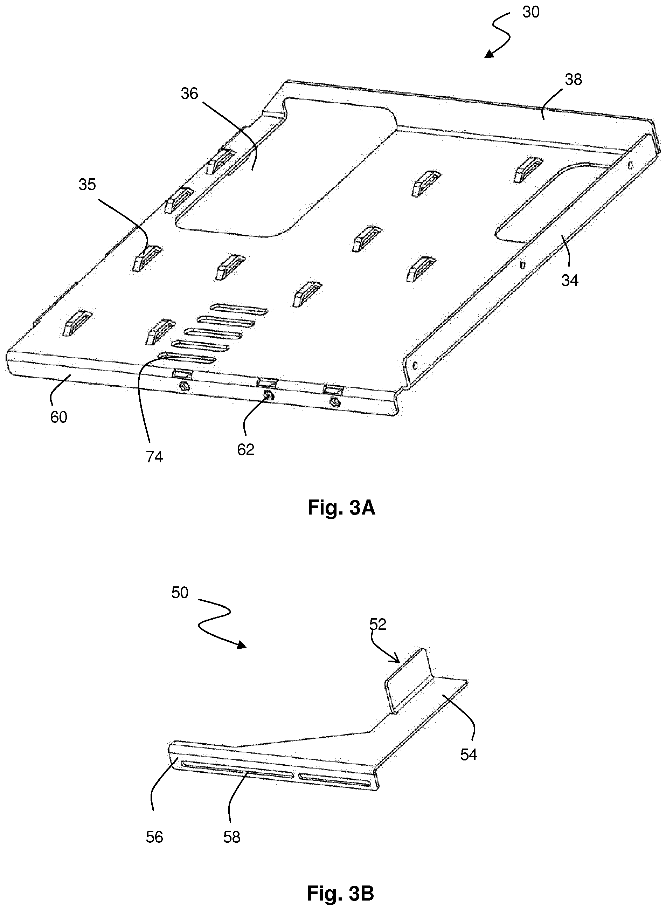

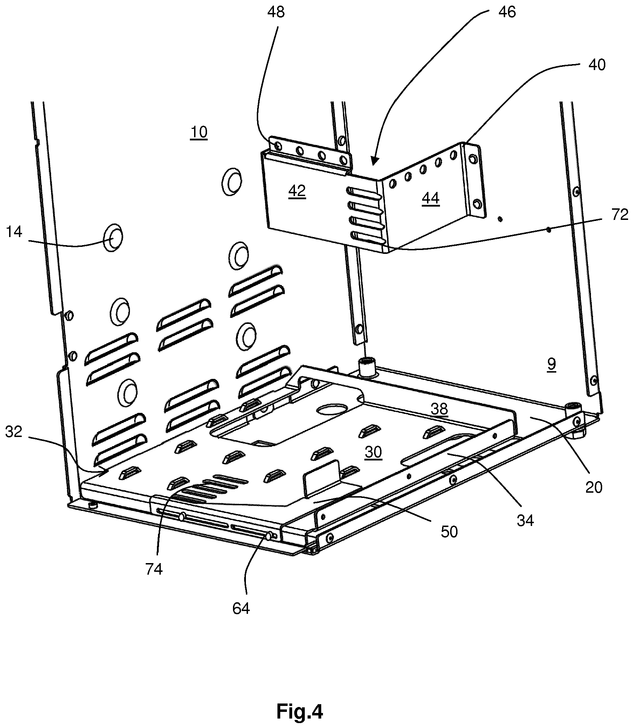

Un deuxième degré de liberté est bloqué paar l'appui par gravité de la batterie 3 sur sa base. La paroi inférieure est elle aussi formée par une plaque 20 sensiblement rectangulaire, munie d'évidements 22 permettant un écoulement de l'air et une ventilation de la batterie, ainsi que d'orifices 24 pour le passage des câbles de raccordement de la batterie 3. Afin de mettre en place des moyens additionnels du système de maintien de la batterie 3, une platine 30 est ici intercalée entre la plaque 20 formant paroi inférieure 5 et la base de la batterie 3. La platine 30 elle-même, illustrée en figure 3A, est solidarisée à la plaque latérale 10 par des moyens de mise en place 32 au niveau de l'arête interne qu'elle forme avec ladite plaque, pour un positionnement figé par rapport à ladite plaque 10 (voir figure 4) ; la platine 30 comprend également des moyens de mise en place 34 opposés à ces moyens de solidarisation 32 et parallèles à eux, qui permettent de délimiter le logement 2 de la batterie 3 mais ne sont pas sollicités par elle. Ces moyens de mise en place 34 sont situés au niveau de l'arête interne que la platine 30 forme avec une paroi opposée à la plaque latérale 10 (non représentée sur la figure 4). La plaque inférieure 20 étant elle-même solidarisée à la plaque latérale 10 (et à la paroi latérale opposée) par des moyens appropriés, la platine 30 est indirectement couplée à la plaque inférieure 20 en étant espacée par l'intermédiaire de moyens qui sont formés par des pliages des deux éléments, plaque 20 et platine 30. Comme précédemment, il est souhaitable que la batterie 3 ne repose pas directement sur ladite patine 30 et des espaceurs 35 sont mis en place, notamment par crevée de la platine 30 : la batterie 3 s'appuie sur lesdits espaceurs 35 afin de libérer un espace, par exemple d'une épaisseur supérieure à 3 mm, entre la platine 30 et la majeure partie du côté de la batterie qui y est appuyée. La platine 30 est enfin munie des orifices 36 nécessaires pour courber les câbles arrivant perpendiculairement à la plaque 20 et redirigés ensuite vers la paroi de fond 9.

La platine 30 comprend également des moyens de butée 38, de préférence un rebord, localisés sur son bord destiné à être mis en place vers la paroi de fond 9 : ce rebord 38 pourra servir à bloquer un troisième degré de liberté de la batterie 3, qui vient s'y adosser vers le fond du logement 2. Il est possible de coupler ce rebord 38 à une plaque métallique servant de surface d'adossement de la batterie 3 (non illustré) ; cependant, avantageusement, la platine 30 est formée par une tôle pliée, et les moyens de butée de fond 38 ont une hauteur réduite, par exemple de l'ordre du centimètre, mais suffisante pour que la batterie 3 soit stoppée lors de sa mise en place. De fait, pour éviter tout basculement notamment lors de tests vibratoires, et pour assurer le blocage du troisième degré de liberté, il est préféré que le haut de la batterie 3 soit accolé à des moyens adaptés. La paroi de fond 9 est donc munie d'un élément d'adossement 40 de la batterie dont une surface d'appui 42 parallèle à la paroi de fond 9 est localisée vers une partie supérieure de la batterie 3 : ainsi, la batterie 3 repose contre la butée 38 en bas et contre la surface d'appui 42 en haut, ce qui libère un maximum de passage pour l'écoulement de ventilation et le passage des câbles.

De préférence, l'élément d'adossement 40 est réalisé à partir d'une tôle pliée solidarisée à la plaque latérale 10 par exemple par rivetage. La surface d'appui 42 peut être de taille restreinte ; elle peut former un bandeau parallèle à la paroi de fond 9 et traversant en largeur le logement 2 (non illustré) ; avantageusement, l'élément d'adossement 40 est sous forme d'une équerre qui est solidarisée à la plaque latérale 20 et à la paroi de fond 9, la surface d'appui 42 étant de taille suffisante pour un maintien de la batterie 3, par exemple sur la moitié de la plus petite dimension, largeur ou hauteur, d'une batterie de taille maximale. La longueur de la partie 44 de l'équerre 40 parallèle à la plaque latérale 10 est supérieure ou avantageusement égale à l'écart entre le rebord 38 de la platine 30 et la paroi de fond 9 lors de la mise en place de la platine 30. L'équerre 40 forme ainsi un espace 46 entre ses deux branches 42, 44 et les parois 10, 9 du coffret 1, dont la taille est suffisante pour permettre le passage des câbles de raccordement à l'intérieur, ce qui permet ainsi un agencement optimisé à l'intérieur du coffret ; la première et/ou la deuxième branche 42, 44 de l'élément d'adossement 40 peuvent d'ailleurs comporter des orifices 48 destinés à la fixation des câbles par des moyens connus.

Un quatrième degré de liberté de la batterie 3 est bloqué par des moyens de butée latérale 50 dont une surface d'appui 52 est orthogonale à la butée 38 / paroi de fond 9. Afin de s'adapter aux dimensions variables en profondeur de la batterie 3 tout en assurant un maintien répondant aux normes sismiques, lesdits moyens de butée latérale 50 sont ajustables en profondeur sur la platine 30, et notamment coulissent entre une position minimale la plus proche de la paroi latérale 10 et une position maximale au niveau du bord latéral 34 de la platine 30. Les moyens de butée ajustables 50 sont notamment sous forme d'un té dont une branche 54 est posée contre la platine 30, à côté de la batterie 3, et munie de la surface d'appui 52 orthogonale ; une deuxième branche du té 56 coulisse le long du bord frontal de la platine 30, avantageusement muni d'un rebord 60 facilitant ledit coulissement. La deuxième branche 56 du té 50 est dotée d'évidements oblongs 58 destinés à coopérer avec des trous 62 dans le rebord frontal 60 de la platine 30 pour solidariser par l'intermédiaire de vis 64 le té 50 en position une fois la dimension choisie et la batterie 3 « coincée », quelle que soit la position relative dudit té 50.

Il est clair que la forme du té 50 peut varier selon les encombrements disponibles, et notamment, dans le mode de réalisation illustré en figure 3B, la première branche 54 du té 50 est triangulaire, la deuxième branche 56 étant un pliage à 90° d'un des bords du triangle 54. De même, il est possible que le guidage des moyens de butée frontale 50 soit réalisé par l'intermédiaire d'un rail percé dans la platine 30 et non contre son bord 60 (non illustré).

Selon l'invention, les deux derniers degrés de liberté de la batterie 3, vers le haut et vers l'avant, sont limités par l'intermédiaire d'un moyen différent, en l'occurrence une sangle 70. De fait, cette option permet par serrage un ajustement précis et une adaptation à plusieurs dimensions. La sangle 70, par exemple de largeur 25 mm et d'épaisseur 1,5 mm, vient se plaquer contre les deux faces de la batterie 3 qui ne sont pas sollicitées par l'un quelconque des autres moyens de maintien (té 50 et/ou plaque 10 et/ou platine 30 et/ou équerre 40) ; la sangle 70 est ainsi solidarisée à la platine 30 et à la paroi de fond 9 par des moyens adaptés.

Notamment, en ce qui concerne la paroi de fond 9, il est avantageux que la surface d'appui 42 de la batterie 3 soit utilisée pour les moyens de solidarisation, étant donné qu'elle est localisée au plus près de la surface supérieure de la batterie 3 qui est à bloquer. En particulier, la surface d'appui 42 de l'équerre 40 est munie d'au moins un orifice oblong 72 parallèle à la platine 30 dans lequel la sangle peut passer. Dans un mode de réalisation préféré, plusieurs orifices 72 sont forés à différentes hauteurs par rapport à la platine 30 : ainsi, l'extrémité de la partie de sangle 70 plaquée sur la surface supérieure de la batterie 3 est au plus près de l'arête concernée, ce qui optimise le maintien. Des moyens similaires 74 de solidarisation de la sangle 72 sont mis en place sur la platine 30, à savoir une pluralité d'orifices 74 parallèles à la surface de guidage 60 du té 50, de façon à également appliquer au plus près la sangle 70 contre le côté correspondant de la batterie 3. La sangle 70 ne forme donc que deux bandes orthogonales l'une à l'autre, plaquées contre deux côtés de la batterie 3, sans angle mort dû à un décalage dans l'ancrage.

Alternativement, la surface d'appui 42 comprend un évidement limité vertical, l'évidement étant fermé par un barreau longitudinal, pouvant coulisser verticalement dans une glissière de façon à définir un orifice de taille variable. La sangle 70 est insérée dans l'orifice ainsi créé et rabattu directement sur le coulisseau qui peut être mis en place au plus près de la batterie 3. De préférence, la face supérieure du coulisseau est de forme courbe pour éviter toute usure possible de la sangle 70. De la même façon, un second coulisseau peut être mis en place sur la platine 30 au niveau d'un évidement pour former l'orifice 74 et les moyens de solidarisation de la sangle 70. Ce mode de réalisation diminue le nombre de manoeuvres lors d'un changement de batterie, la sangle pouvant rester en place, le(s) coulisseau(x) devant juste être déplacé(s).

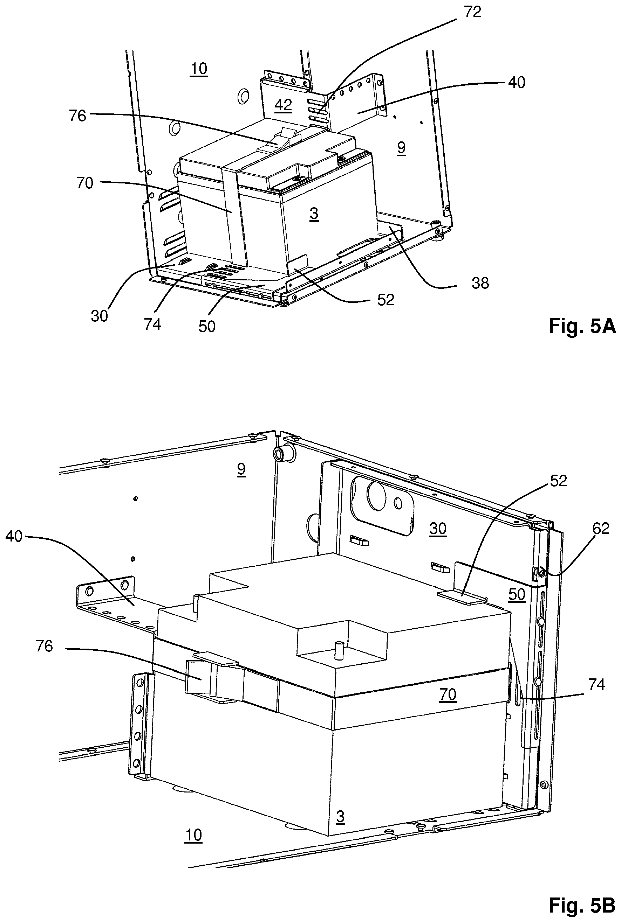

Bien que décrit ci-dessus en relation avec une position verticale du coffret 1, les mêmes éléments permettent le maintien de la batterie 3 en position horizontale. De fait, lors de la mise en place d'une batterie 3, quelle que soit la configuration horizontale ou verticale du coffret 1 dont la platine 30 étant préalablement couplée à la plaque inférieure 20 du coffret 1, on procède ainsi :
1. dévisser les (deux) vis de fixation 64 du té 50 coulissant ;
2. positionner le té 50 en position maximale, la plus éloignée de la paroi latérale 10 ;
3. passer la sangle 70 dans les encoches 72, 74 choisies au niveau de l'équerre de fixation 40 et de la platine 30 ou en déplaçant le(s) coulisseau(x), en passant sous la platine 30 et dans l'espace 46 de l'équerre 40, et en maintenant libres ses deux extrémités dans le logement 2 ;
4. positionner la batterie 3 (soit sur la platine 30 comme illustré en figure 5A pour une batterie 3 de taille minimale admise par le système dans le cas où une optimisation du maintien est requise, soit sur la plaque latérale 10 comme illustré en figure 5B pour une batterie 3 de taille supérieure) ;
5. boucler la sangle 70 en tirant au maximum, de façon à la plaquer contre deux faces de la batterie 3 - avantageusement, la boucle 76 n'est pas métallique pour éviter tout problème avec les bornes de raccordement de la batterie 3 ; alternativement à la configuration de la figure 5A, la boucle 76 peut être mise en place le long de la face avant de la batterie 3 ;
6. déplacer le té 50 en coulissant depuis la position maximale jusqu'à le caler contre la batterie 3 ;
7. visser les deux vis de fixation 64 du té 50.

La mise en place ou le retrait de la batterie sont donc réalisés sans outils spécifiques, de façon simple, tout en assurant un maintien optimal, et ce dans tous les cas prévus. De fait, la solution selon l'invention permet de satisfaire simultanément :
- la mise en oeuvre en position verticale et en position horizontale ;
- le verrouillage sur trois axes d'un élément de taille variable, assuré dans les deux positions par les mêmes moyens, permettant de satisfaire les tests sismiques et vibratoires ; et
- la maintenance de la batterie dans le coffret sans recours à des outils spécifiques, avec facilité d'accès et de mise en place.

De plus, la problématique de la dissipation thermique est également résolue, en supplément des éléments précédents, grâce à des espaces libres autour de la batterie quelle que soit la configuration choisie.

En résumé, l'invention décrit un principe de fixation d'une batterie 3, ou plus généralement d'un boîtier parallélépipédique, de taille variable dans un coffret 1 pouvant être utilisé aussi bien en position verticale qu'en position horizontale, et maintenu sur les trois axes de translation pour des exigences normatives de tenue au séisme, avec :
- une sangle 70 de fixation réglable ;
- une platine 30 servant de support dans le cas d'un ITI vertical, qui comporte au moins une encoche 74, de préférence cinq encoches 74 et/ou de taille adapatable par un coulisseau, pour l'ajustement de la sangle 70, une butée 38 métallique en profondeur, et des inserts 62 pour la fixation de moyens de butée coulissants 50, ainsi que des crevées 35 pour garantir que la batterie 3 ne soit pas en appui direct, ce qui permet une meilleure ventilation ;
- une plaque latérale 10 (qui devient support dans le cas d'un ITI horizontal), comportant des ouïes d'aération 22 et des emboutis 24 pour garantir que la batterie 3 ne soit pas en appui direct, ce qui permet une meilleure ventilation ;
- une équerre d'adossement 40, positionnée sur la paroi de fond 9 (aussi bien dans le cas d'un ITI vertical qu'horizontal), qui comporte quatre encoches 72 ou une encoche ajustable par un coulisseau, pour l'ajustement de la sangle 70, et sert aussi de butée 42 en profondeur ;
- un té 50 coulissant qui peut être fixé par deux vis 64 grâce aux perçages oblongs 58 dans les inserts 62 de la platine de support 30, qui permet un ajustement et le maintien en latéral pour un ITI vertical (et donc en hauteur pour un ITI horizontal).

La sangle 70 assure le maintien selon deux axes, et les moyens de butée ajustable 50 selon le troisième axe. Le système de glissière offre les possibilités d'ajustement et d'adaptation aux différentes dimensions de batteries 3, sans préconiser du sens (vertical/horizontal) de montage du coffret, tout comme les encoches de réglage 72, 74. La conception permet également une ventilation sur toutes les faces de la batterie 3 soit avec une pièce intermédiaire 40 créant le décalage, soit par des emboutis 14 directement sur la pièce 10, soit par des crevées 35 directement sur la pièce 30. Qui plus est, les pièces métalliques de fixation ne sont pas en contact avec les cosses situées sur la face supérieure de la batterie 3.

Bien que l'invention ait été décrite en référence à un coffret bi-position d'interface de télécommande d'interrupteur supportant directement la batterie 3, elle ne s'y limite pas : le système de maintien peut être utilisé dans d'autres applications supportant des contraintes équivalentes. Par ailleurs, certains des éléments ci-dessus décrits peuvent être omis si les avantages associés ne sont pas indispensables, comme par exemple une diminution du nombre et/ou de l'ajustement des orifices 72, 74 de sangle 70. De plus, si le mode préféré montre des parois inférieure et latérale 5, 7 formées par les plaques 10, 20 associées au dispositif de maintien, il est possible de mettre en place lesdites plaques 10, 20 sur des parois externes de coffret 1 en les doublant, notamment s'il est souhaité d'avoir un coffret de parois pleines.

## Revendications

1. Système de maintien d'un boîtier électrique dans une enveloppe de coffret (1) comprenant une platine (30) sensiblement rectangulaire, une plaque latérale (10) sensiblement rectangulaire et un élément d'adossement (40) comprenant une surface d'appui (42), la surface d'appui (42), la plaque latérale (10) et la platine (30) étant solidarisées entre elles et formant trois plans orthogonaux entre eux qui délimitent un trièdre rectangle de logement (2) dudit boîtier, **caractérisé en ce que** :
- le système comprend une sangle (70) ;
- la surface d'appui (42) et la platine (30) comprennent au moins un orifice (72, 74) longitudinal de passage de la sangle (70), de sorte que, selon la taille du boîtier mis en place dans le logement (2), la sangle (70) tendue entre les orifices (72, 74) forme un triangle ou un quadrilatère passant à l'extérieur du trièdre contre la platine (30) et la surface d'appui (42), la sangle (70) étant à plat sur chacun de ses côtés ;
- la platine (30) comprend des moyens de butée mobile (50), lesdits moyens (50) comprenant une surface de butée (52) dont le plan est parallèle à celui de la plaque latérale (10) et peut coulisser dans une direction orthogonale auxdits plans, la platine (30) comprenant en outre des moyens de guidage (60) des moyens de butée mobile (50) et des moyens de fixation amovible (64) desdits moyens de butée mobile (50) dans plusieurs positions relatives par rapport à la platine (30).

2. Système selon la revendication 1 dans lequel l'élément d'adossement (40) et/ou la platine (30) comprennent une pluralité d'orifices de passage de la sangle (70), lesdits orifices (72, 74) étant parallèles entre eux et alignés selon une direction orthogonale à leur axe longitudinal.

3. Système selon la revendication 1 dans lequel l'élément d'adossement (40) comprend un coulisseau longitudinal définissant au moins un orifice de passage de la sangle (70), ledit coulisseau étant mobile selon une direction orthogonale.

4. Système selon l'une des revendications 1 à 3 dans lequel la platine (30) comprend une butée fixe (38) plane dont le plan est confondu avec celui de la surface d'appui (42).

5. Système selon l'une des revendications 1 à 4 dans lequel les moyens de butée mobile (50) comprennent un premier côté (54) plan pouvant coulisser à plat sur la platine (30) et portant la surface de butée (52), et un deuxième côté (56) pouvant coopérer avec les moyens de guidage (60) de ladite platine (30).

6. Système selon la revendication 5 dans lequel les moyens de guidage (60) sont formés par un bord de la platine (30), le deuxième côté (56) des moyens de butée mobile (50) est formé par un bord plié du premier côté (54), le bord de la platine (60) comprend des orifices (62), le deuxième côté (56) des moyens de butée mobile (50) comprend deux orifices oblongs (58), et les moyens de fixation comprennent deux vis (64).

7. Système selon l'une des revendications 1 à 6 dans lequel la platine (30) comprend des rebords (32, 34) de mise en place sur ses côtés parallèles à la plaque latérale (10) et des moyens espaceurs (35) définissant un plan parallèle à ladite platine (10) à l'intérieur du trièdre.

8. Système selon l'une des revendications 1 à 7 dans lequel la platine (30), la plaque latérale (10), les moyens de butée mobile (50) et/ou l'élément d'adossement (40) sont des tôles pliées

9. Système selon l'une des revendications 1 à 8 comprenant en outre une plaque de fond (9) solidarisée à la plaque latérale (10), l'élément d'adossement (40) étant sous forme d'équerre dont un côté (44) est fixé à la plaque de fond (9) et la surface d'appui (42) est fixée à la plaque latérale (10).

10. Système selon l'une des revendications 1 à 9 dans lequel la plaque latérale (10) comprend des ouïes d'aération (12) et des moyens espaceurs (14) définissant un plan parallèle à ladite plaque (10) à l'intérieur du trièdre.

11. Système selon l'une des revendications 1 à 10 comprenant en outre une plaque inférieure (20) dotée d'évidements (22) solidarisée à la plaque latérale (10) et parallèle à la platine (30) à l'extérieur du trièdre.

12. Enveloppe de coffret de télécommande avec cinq parois fixes et une paroi munie de moyens d'accès, comprenant un logement (2) et un système de maintien selon l'une des revendications 1 à 11 dont le trièdre délimite trois côtés dudit logement (2).

13. Enveloppe selon la revendication 12 dans laquelle le système de maintien est conforme à la revendication 11 et deux parois fixes de l'enveloppe forment les plaques latérale et inférieure (10, 20) dudit système.

14. Enveloppe selon la revendication 13 dans laquelle le système de maintien est conforme à la revendication 9, ladite plaque de fond (9) étant formée par une troisième paroi de l'enveloppe.

15. Coffret d'interface de télécommande d'interrupteurs (1) comprenant une enveloppe selon l'une des revendications 12 à 14 dans lequel une batterie (3) est mise en place dans le logement (2) et maintenue par le système de maintien.

## Patentansprüche

1. System zur Befestigung eines elektrischen Schaltschranks (3) in einer Gehäusehülle (1), umfassend eine im Wesentlichen rechteckige Platte (30), eine im Wesentlichen rechteckige Seitenplatte (10) und ein Halteelement (40), umfassend eine Anlagefläche (42), wobei die Anlagefläche (42), die Seitenplatte (10) und die Platte (30) fest miteinander verbunden sind und drei orthogonale Ebenen miteinander bilden, die einen rechteckigen Aufnahmetrieder (2) für den Schrank (3) definieren, **dadurch gekennzeichnet, dass**:
- das System einen Gurt (70) umfasst;
- die Anlagefläche (42) und die Platte (30) mindestens eine longitudinale Öffnung (72, 74) für den Durchgang des Gurts (70) derart umfassen, dass gemäß der Größe des in der Aufnahme (2) platzierten Schranks der zwischen den Öffnungen (72, 74) gespannte Gurt (70) ein Dreieck oder ein Viereck bildet, das zur Außenseite des Trieders gegen die Platte (30) und die Anlagefläche (42) verläuft, wobei der Gurt (70) an jeder seiner Seiten flach ist;
- die Platte (30) bewegliche Anschlagmittel (50) umfasst, wobei die Mittel (50) eine Anschlagfläche (52) umfassen, deren Ebene parallel zu jener der Seitenplatte (10) ist, und in einer Richtung orthogonal zu den Ebenen gleiten kann, wobei die Platte (30) außerdem Führungsmittel (60) der beweglichen Anschlagmittel (50) und abnehmbare Befestigungsmittel (64) der beweglichen Anschlagmittel (50) in mehreren relativen Positionen in Bezug auf die Platte (30) umfasst.

2. System nach Anspruch 1, wobei das Halteelement (40) und/oder die Platte (30) mehrere Öffnungen für den Durchgang des Gurts (70) umfassen, wobei die Öffnungen (72, 74) zueinander parallel und in einer Richtung orthogonal zu ihrer Längsachse ausgerichtet sind.

3. System nach Anspruch 1, wobei das Halteelement (40) einen longitudinalen Schieber umfasst, der mindestens eine Öffnung für den Durchgang des Gurts (70) definiert, wobei der Schieber in einer orthogonalen Richtung bewegbar ist.

4. System nach einem der Ansprüche 1 bis 3, wobei die Platte (30) einen ebenen festen Anschlag (38) umfasst, dessen Ebene mit jener der Anlagefläche (42) zusammenfällt.

5. System nach einem der Ansprüche 1 bis 4, wobei die beweglichen Anschlagmittel (50) eine erste ebene Seite (54), die flach auf der Platte (30) gleiten kann und die Anschlagfläche (52) trägt, und eine zweite Seite (56), die mit den Führungsmitteln (60) der Platte (30) zusammenwirken kann, umfassen.

6. System nach Anspruch 5, wobei die Führungsmittel (60) durch einen Rand der Platte (30) gebildet sind, die zweite Seite (56) der beweglichen Anschlagmittel (50) durch einen gefalteten Rand der ersten Seite (54) gebildet ist, der Rand der Platte (60) Öffnungen (62) umfasst, die zweite Seite (56) der beweglichen Anschlagmittel (50) zwei längliche Öffnungen (58) umfasst, und die Befestigungsmittel zwei Schrauben (64) umfassen.

7. System nach einem der Ansprüche 1 bis 6, wobei die Platte (30) Flansche (32, 34) zur Platzierung an ihren parallelen Seiten an der Seitenplatte (10) und Abstandshaltermittel (35) umfasst, die eine Ebene parallel zur Platte (10) im Inneren des Trieders definieren.

8. System nach einem der Ansprüche 1 bis 7, wobei die Platte (30), die Seitenplatte (10), die beweglichen Anschlagmittel (50) und/oder das Halteelement (40) Falzbleche sind.

9. System nach einem der Ansprüche 1 bis 8, ferner umfassend eine Grundplatte (9), die fest mit der Seitenplatte (10) verbunden ist, wobei das Halteelement (40) die Form eines Winkels aufweist, dessen eine Seite (44) an der Grundplatte (9) befestigt ist, und die Anlagefläche (42) an der Seitenplatte (10) befestigt ist.

10. System nach einem der Ansprüche 1 bis 9, wobei die Seitenplatte (10) Lüftungsschlitze (12) und Abstandshaltermittel (14) umfasst, die eine Ebene parallel zur Platte (10) im Inneren des Trieders definieren.

11. System nach einem der Ansprüche 1 bis 10, ferner umfassend eine untere Platte (20), welche mit Ausnehmungen (22) versehen ist, die mit der Seitenplatte (10) fest verbunden und parallel zur Platte (30) an der Außenseite des Trieders sind.

12. Gehäusehülle zur Fernsteuerung mit fünf festen Wänden und einer Wand, die mit Zugangsmitteln versehen ist, umfassend eine Aufnahme (2) und ein Haltesystem nach einem der Ansprüche 1 bis 11, dessen Trieder drei Seiten der Aufnahme (2) begrenzt.

13. Hülle nach Anspruch 12, wobei das Haltesystem Anspruch 11 entspricht, und zwei feste Wände der Hülle die Seitenplatte und die untere Platte (10, 20) des Systems bilden.

14. Hülle nach Anspruch 13, wobei das Haltesystem Anspruch 9 entspricht, und die Grundplatte (9) durch eine dritte Wand der Hülle gebildet ist.

15. Gehäuse (1) einer Fernsteuerungsschnittstelle von Unterbrechern, umfassend eine Hülle nach einem der Ansprüche 12 bis 14, wobei eine Batterie (3) in der Aufnahme (2) aufgenommen ist und von dem Haltesystem gehalten wird.

## Claims

1. System for holding an electric unit (3) in a box enclosure (1) comprising a substantially rectangular bottom plate (30), a substantially rectangular lateral plate (10) and a strut element (40) comprising a bearing surface (42), the bearing surface (42), the lateral plate (10) and the bottom plate (30) being secured together and forming three mutually orthogonal planes which delimit a rectangular housing trihedron (2) for said unit (3), **characterized in that**:
- the system comprises a strap (70);
- the bearing surface (42) and the bottom plate (30) comprise at least one longitudinal orifice (72, 74) for the passage of the strap (70), such that, depending on the size of the unit placed in the housing (2), the strap (70) tightened between the orifices (72, 74) forms a triangle or a quadrilateral passing outside of the trihedron against the bottom plate (30) and the bearing surface (42), the strap (70) lying flat on each of its sides;
- the bottom plate (30) comprises mobile abutment means (50), said means (50) comprising an abutment surface (52) of which the plane is parallel to that of the lateral plate (10) and can slide in a direction orthogonal to said planes, the bottom plate (30) further comprising guiding means (60) for the mobile abutment means (50) and removable fixing means (64) for said mobile abutment means (50) in several relative positions in relation to the bottom plate (30).

2. System according to Claim 1, in which the strut element (40) and/or the bottom plate (30) comprise a plurality of orifices for passage of the strap (70), said orifices (72, 74) being parallel to one another and aligned in a direction orthogonal to their longitudinal axis.

3. System according to Claim 1, in which the strut element (40) comprises a longitudinal slide defining at least one orifice for passage of the strap (70), said slide being mobile in an orthogonal direction.

4. System according to one of Claims 1 to 3, in which the bottom plate (30) comprises a planar fixed abutment (38), the plane of which coincides with that of the bearing surface (42).

5. System according to one of Claims 1 to 4, in which the mobile abutment means (50) comprise a planar first side (54) that can slide lying flat on the bottom plate (30) and bearing the abutment surface (52), and a second side (56) that can cooperate with the guiding means (60) of said bottom plate (30).

6. System according to Claim 5, in which the guiding means (60) are formed by an edge of the bottom plate (30), the second side (56) of the mobile abutment means (50) is formed by a folded edge of the first side (54), the edge of the bottom plate (60) comprises orifices (62), the second side (56) of the mobile abutment means (50) comprises two oblong orifices (58), and the fixing means comprise two screws (64).

7. System according to one of Claims 1 to 6, in which the bottom plate (30) comprises placement rims (32, 34) on its sides parallel to the lateral plate (10) and spacer means (35) defining a plane parallel to said bottom plate (10) inside the trihedron.

8. System according to one of Claims 1 to 7, in which the bottom plate (30), the lateral plate (10), the mobile abutment means (50) and/or the strut element (40) are folded steel plates.

9. System according to one of Claims 1 to 8 further comprising a back plate (9) secured to the lateral plate (10), the strut element (40) being in the form of a bracket of which one side (44) is fixed to the back plate (9) and the bearing surface (42) is fixed to the lateral plate (10).

10. System according to one of Claims 1 to 9, in which the lateral plate (10) comprises ventilation inlets (12) and spacer means (14) defining a plane parallel to said plate (10) inside the trihedron.

11. System according to one of Claims 1 to 10, further comprising a base plate (20) provided with voids (22) secured to the lateral plate (10) and parallel to the bottom plate (30) outside of the trihedron.

12. Remote control box enclosure with five fixed walls and a wall provided with access means, comprising a housing (2) and a holding system according to one of Claims 1 to 11 of which the trihedron delimits three sides of said housing (2).

13. Enclosure according to Claim 12, in which the holding system conforms to Claim 11 and two fixed walls of the enclosure form the lateral and base plates (10, 20) of said system.

14. Enclosure according to Claim 13, in which the holding system conforms to Claim 9, said back plate (9) being formed by a third wall of the enclosure.

15. Switch remote control interface box (1) comprising an enclosure according to one of Claims 12 to 14, in which a battery (3) is placed in the housing (2) and held by the holding system.
